# EUROPEAN PATENT APPLICATION

(11) **EP 4 501 507 A1**
(43) Date of publication of application: **05.02.2025**
(21) Application number: 23779450.8
(22) Date of filing: 10.03.2023
(51) Int. Cl.: B23C 5/10

(54) **BALL END MILL**

(30) Priority: 31.03.2022 JP 2022058902
(71) Applicant: MOLDINO Tool Engineering, Ltd., Tokyo 130-0026 (JP)
(72) Inventor: IHARADA, Yuki, Yasu-shi, Shiga 520-2323 (JP)
(74) Representative: Hoffmann Eitle
(86) International application number: PCT/JP2023/009327
(87) International publication number: WO 2023/189426

(57) **Abstract**

A two-flute ball end mill includes a cutting edge that is formed at an intersection ridge line between a groove wall surface of a gash groove and a flank surface; and the flank surface includes a first flank surface that forms a chisel edge and a second flank surface that extends from the first flank surface to a rear side in a rotation direction with a larger clearance angle. In a case where, as seen from a tip side in an axial direction, an intersection point between one cutting edge of two cutting edges and the chisel edge is defined as a first intersection point, a straight line perpendicular to a cutting edge tangent line at the first intersection point and passing through an axis is defined as a reference line, and an intersection point between a flank surface boundary line between the first flank surface and the second flank surface of the other cutting edge of the cutting edges and the groove wall surface is defined as a second intersection point, the second intersection point is located on a front side in the rotation direction with respect to the reference line, and the flank surface boundary line of the other cutting edge intersects the cutting edge tangent line of the one cutting edge.

## Description

### [Technical Field]

The present invention relates to a ball end mill.

Priority is claimed on Japanese Patent Application No. 2022-058902, filed in Japan on March 31, 2022, the content of which is incorporated herein by reference.

### [Background Art]

Most of chips generated by a cutting edge of a ball end mill are smoothly discharged from a gash groove adjacent to the cutting edge. However, chips generated near a rotation axis where a chisel edge is formed tend to stay because a space closed by the chisel edge, a flank surface, and a machined surface is formed nearby.

Patent Document 1 discloses a configuration in which, in a case of processing extremely hard materials such as cemented carbide, chip clogging occurring near the rotation axis can lead to defects near a tool center, so that as a measure to improve chip discharge performance of an inner peripheral edge of a bottom edge, the inner peripheral edge of the bottom edge serves as a starting point of a groove wall surface of the gash groove.

In addition, Patent Document 2 and Patent Document 3 disclose that, in order to obtain a favorable machined surface roughness, an edge portion thickness angle, a chisel width, a chisel angle, and the like are set within a predetermined range, and a flank surface having a relatively small predetermined clearance angle and flank surface width is provided as a flank surface adjacent to an arcuate cutting edge.

### [Citation List]

### [Patent Documents]

[Patent Document 1]
   Japanese Unexamined Patent Application, First Publication No. 2018-83245
[Patent Document 2]
   Japanese Unexamined Patent Application, First Publication No. 2005-342835
[Patent Document 3]
   Japanese Unexamined Patent Application, First Publication No. 2006-088232

### [Summary of Invention]

### [Technical Problem]

Even when a measure for a shape of the groove wall surface of the gash groove is made as in Patent Document 1, in machining of an extremely hard workpiece such as cemented carbide, although the chip discharge performance sufficient to suppress damages near the rotation axis caused by clogging of the extremely hard chips is obtained, in finishing where high-quality surface properties are desired, deposited metals may occur on the machined surface, leading to deterioration of the machined surface properties. Additionally, even when the shape of the chisel edge, and the clearance angle and the flank surface width of the flank surface are adjusted as in Patent Document 2 and Patent Document 3, deposited metals or scratches may still occur on the machined surface.

The present invention has been made in view of such a background, and one of objects of the present invention is to provide a ball end mill capable of improving a quality of a machined surface in a ball end mill in which a chisel edge is formed.

### [Solution to Problem]

According to one aspect of the present invention, there is provided a ball end mill including: an end mill body configured to rotate around an axis; and two cutting edges, in which the cutting edge is formed at an intersection ridge line between a groove wall surface of a gash groove and a flank surface located on a rear side in a rotation direction of the gash groove, and the flank surface includes a first flank surface that forms a chisel edge and a second flank surface that extends from the first flank surface to the rear side in the rotation direction with a larger clearance angle, and in a case where, as seen from a tip side in an axial direction, an intersection point between one cutting edge of the cutting edges and the chisel edge is defined as a first intersection point, a straight line perpendicular to a cutting edge tangent line at the first intersection point and passing through the axis is defined as a reference line, and an intersection point between a flank surface boundary line between the first flank surface and the second flank surface of the other cutting edge of the cutting edges and the groove wall surface is defined as a second intersection point, the second intersection point is located on a front side in the rotation direction with respect to the reference line, and the flank surface boundary line of the other cutting edge intersects the cutting edge tangent line of the one cutting edge.

That is, a region (chisel edge front region) surrounded by the chisel edge, the cutting edge located on the front side in the rotation direction of the chisel edge, and the reference line consists of only the first flank surface and does not include a boundary portion (flank surface boundary line) between the first flank surface and the second flank surface. With this configuration, an edge portion that is convex toward a machined surface is not formed in the chisel edge front region which is in the vicinity of a region where chips are generated during cutting and is a region that is likely to be blocked. As a result, the chips are less likely to be pressed against the machined surface near the rotation axis, and occurrence of deposited metals can be suppressed.

At the same time, the cutting edge (axis-side cutting edge) that originally defines the chisel edge front region is close to the rotation axis and is less likely to increase a cutting speed. However, by configuring the chisel edge front region only with the first flank surface, a wedge angle of the axis-side cutting edge becomes relatively small as compared to a case where the second flank surface is present in the chisel edge front region. As a result, cutting performance of the axis-side cutting edge is improved, and occurrence of scratches can be suppressed.

Further, when the flank surface boundary line of one cutting edge intersects the tangent line of the other cutting edge at the intersection point (first intersection point) with the chisel edge, a width of the first flank surface of the cutting edge located on an outer peripheral side in an edge normal direction can be narrowed. This makes it possible to suppress an unnecessary increase in cutting resistance and to ensure the cutting performance of the cutting edge that mainly performs cutting.

It is possible to comprehensively improve machined surface properties (roughness and quality) in finishing through synergistic effects of suppressing the occurrence of deposited metals, suppressing the occurrence of scratches, and good cutting performance of the cutting edge.

A configuration may be adapted, in which as seen from the tip side in the axial direction, the tip surface has a portion where a total flank surface width in an extension direction of the reference line of the first flank surface of the one cutting edge and the first flank surface of the other cutting edge, which are adjacent to each other at the chisel edge, decreases toward an outer peripheral side in a radial direction from the second intersection point.

A configuration may be adapted, in which as seen from the tip side in the axial direction, the flank surface boundary line has a portion extending in a direction approaching the chisel edge from the second intersection point toward an outer peripheral side in a radial direction.

A configuration may be adapted, in which as seen from the tip side in the axial direction, a rake angle in an edge normal direction of a rake surface of an axis-side cutting edge, which is located on an outer peripheral side in a radial direction with respect to the reference line and on an axis side in the radial direction with respect to the first intersection point, is a negative angle.

A configuration may be adapted, in which the rake angle is -30° or more and - 15° or less, and a clearance angle of the first flank surface is 5° or more and less than 10°.

### [Advantageous Effects of Invention]

According to an aspect of the present invention, a ball end mill capable of improving a quality of a machined surface is provided.

### [Brief Description of Drawings]

FIG. 1 is a side view showing a ball end mill according to an embodiment.
FIG. 2 is a partial side view showing a tip part of the ball end mill according to the embodiment.
FIG. 3 is a plan view of a tip surface of the ball end mill as seen in an axial direction.
FIG. 4 is an enlarged plan view showing the vicinity of a chisel of a first embodiment.
FIG. 5 is an enlarged plan view showing the vicinity of a chisel of a second embodiment.
FIG. 6 is a partial cross-sectional view of a chisel portion at a position along a reference line L in FIGS. 4 and 5.
FIG. 7 is a reference diagram showing a chisel edge region of another configuration for comparison.
FIG. 8 is a reference diagram showing a cross section along the reference line L shown in FIG. 7.
FIG. 9 is photographs of machined surfaces in an example and a comparative example.

### [Description of Embodiments]

### <First Embodiment>

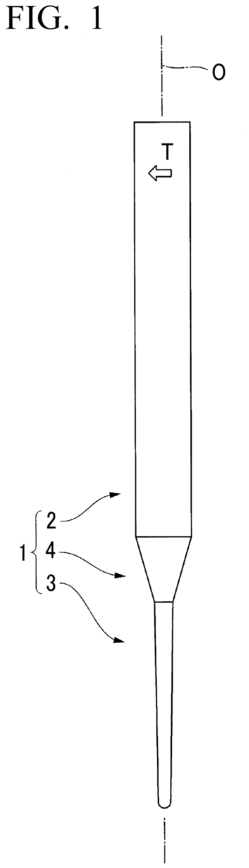

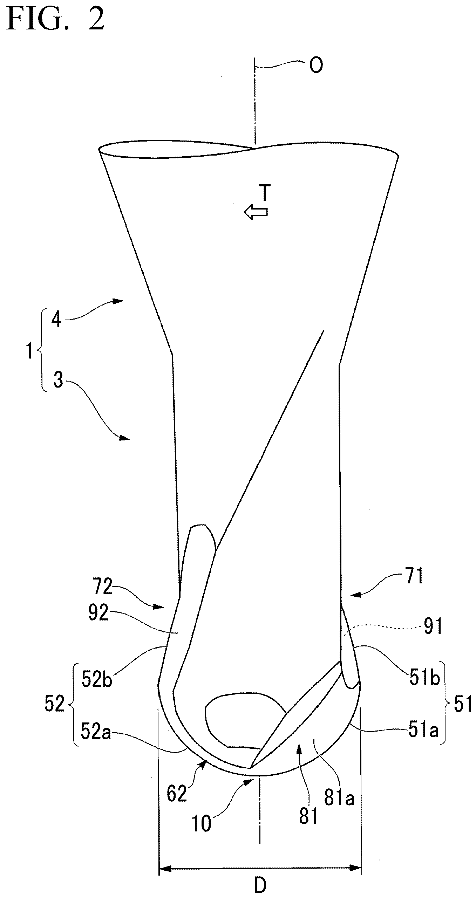

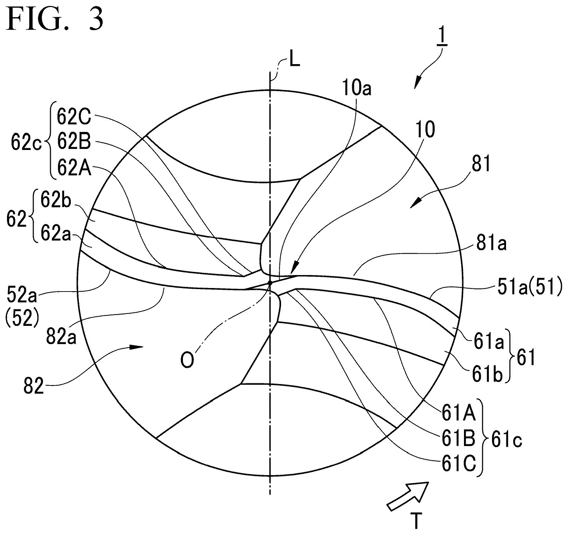

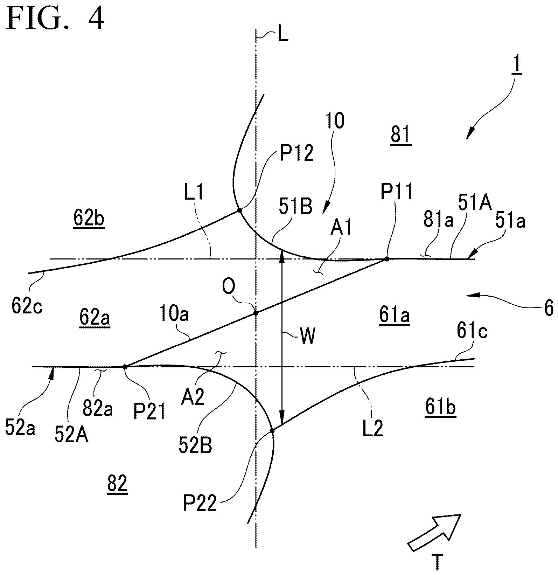

FIG. 1 is a side view showing a ball end mill according to an embodiment. FIG. 2 is a partial side view showing a tip part of the ball end mill according to the embodiment. FIG. 3 is a plan view of a tip surface of the ball end mill as seen in an axial direction. FIG. 4 is an enlarged plan view showing the vicinity of a chisel of the first embodiment.

A ball end mill 1 according to the present embodiment is integrally formed in a multi-stage, substantially cylindrical shape as shown in FIG. 1 about an axis O, from a base material made of a hard material such as cemented carbide. A rear end part (upper part in FIGS. 1 and 2) of the ball end mill 1 is formed as a large-diameter cylindrical shank 2. A tip part (lower part in FIGS. 1 and 2) of the ball end mill 1 is a substantially cylindrical end mill body 3 with a smaller diameter than the shank 2. Additionally, the shank 2 and the end mill body 3 are connected by a tapered neck 4 having a tapered truncated cone shape about the axis O.

In the present specification, a direction parallel to the axis O may be simply referred to as an "axial direction", a direction perpendicular to the axis O may be simply referred to as a "radial direction", and a circumferential direction about the axis O may be simply referred to as a "circumferential direction". Additionally, when seen in the axial direction, an outer side in the radial direction may be referred to as an outer peripheral side, and an inner side in the radial direction may be referred to as an inner peripheral side or an axis side.

The ball end mill 1 is fed in a direction intersecting the axis O while the shank 2 is gripped by a spindle of a machine tool and rotated around the axis O in an end mill rotation direction T, so that cutting is performed on a workpiece by cutting edges 51 and 52 formed on the end mill body 3. That is, a rotation axis of the ball end mill 1 coincides with the axis O.

The ball end mill 1 is a two-flute ball end mill having two cutting edges 51 and 52. The cutting edge 51 includes a bottom edge 51a and an outer peripheral edge 51b. The cutting edge 52 includes a bottom edge 52a and an outer peripheral edge 52b.

Two chip discharge grooves 71 and 72, which open to tip flank surfaces 61 and 62 located at a tip of the ball end mill 1 and extend toward a rear end side, are formed on an outer peripheral portion of the end mill body 3 in a rotationally symmetrical manner with respect to the axis O. The chip discharge grooves 71 and 72 are twisted in a spiral shape around the axis O to be directed opposite to the end mill rotation direction T, as they extend toward the rear end side of the ball end mill 1. The ball end mill 1 is formed in a rotationally symmetrical shape with respect to the axis O by 180°.

In a tip part of each of the two chip discharge grooves 71 and 72, a concave groove-like gash groove 81 or 82 is formed to extend to an inner peripheral side of the ball end mill 1 toward a tip side. The bottom edges 51a and 52a of the cutting edges 51 and 52 are formed at an intersection ridge line portion between groove wall surfaces 81a and 82a of the gash grooves 81 and 82, which face the end mill rotation direction T, and the tip flank surfaces 61 and 62. As shown in FIG. 2, the bottom edges 51a and 52a are formed such that a rotation locus around the axis O forms a convex hemispherical surface shape centered on the axis O. In the present embodiment, a diameter D of a convex hemispherical surface formed by the rotation locus of the bottom edges 51a and 52a is 2 mm or less. A lower limit of the diameter D is not particularly restricted, but the diameter D is preferably 0.1 mm or more. When the diameter D is 0.1 mm or more, a width and a shape of a chisel portion 10, which will be described later, can be accurately controlled.

Outer peripheral flank surfaces 91 and 92 extending along the chip discharge grooves 71 and 72 are formed on an outer peripheral surface of the end mill body 3. The outer peripheral flank surfaces 91 and 92 are each adjacent to sides of the chip discharge grooves 71 and 72 opposite to the end mill rotation direction T. On an intersection ridge line portion between the outer peripheral flank surface 91 and a wall surface of the chip discharge groove 71, which faces the end mill rotation direction T, on the rear end side with respect to the gash groove 81, the outer peripheral edge 51b of the cutting edge 51 is formed. On an intersection ridge line portion between the outer peripheral flank surface 92 and a wall surface of the chip discharge groove 72, which faces the end mill rotation direction T, on the rear end side with respect to the gash groove 82, the outer peripheral edge 52b of the cutting edge 52 is formed.

The outer peripheral edges 51b and 52b are formed such that a rotation locus around the axis O forms a cylindrical surface shape centered on the axis O to have a diameter equal to the diameter D of the convex hemispherical surface formed by the rotation locus of the bottom edges 51a and 52a. The outer peripheral edges 51b and 52b are provided as necessary. That is, the cutting edge of the ball end mill 1 may be configured to consist of only the bottom edge.

As shown in FIGS. 3 and 4, the two gash grooves 81 and 82 pass each other on opposite sides without overlapping with the axis O interposed therebetween, as seen from the tip side in the axial direction. As shown in FIG. 2, an inner peripheral portion of the groove wall surface 81a of the gash groove 81, which faces the end mill rotation direction T, extends across the axis O in a side view seen from a direction facing the groove wall surface 81a. The same applies to the groove wall surface 82a of the gash groove 82.

The tip flank surface 61 includes a first flank surface 61a adjacent to a rear side of the bottom edge 51a in the end mill rotation direction T, and a second flank surface 61b adjacent to a rear side of the first flank surface 61a in the end mill rotation direction T. The tip flank surface 62 includes a first flank surface 62a adjacent to a rear side of the bottom edge 52a in the end mill rotation direction T, and a second flank surface 62b adjacent to a rear side of the first flank surface 62a in the end mill rotation direction T. The rotation locus of the tip flank surfaces 61 and 62 is located inside the rotation locus of the bottom edges 51a and 52a. Clearance angles of the second flank surfaces 61b and 62b are larger than clearance angles of the first flank surfaces 61a and 62a.

In an inner peripheral portion of the tip of the end mill body 3, a chisel portion 10 is formed between two gash grooves 81 and 82 that extend to pass each other. In the chisel portion 10, a chisel edge 10a intersecting the axis O is formed as an intersection ridge line where two tip flank surfaces 61 and 62 connected to sides of two bottom edges 51a and 52a opposite to the end mill rotation direction T intersect each other. In the present embodiment, the chisel edge 10a is formed at the intersection ridge line between the two first flank surfaces 61a and 62a.

In the present embodiment, as seen from the tip side in the axial direction, the bottom edges 51a and 52a are arranged in a so-called raised center height arrangement in which the bottom edges 51a and 52a are arranged on the end mill rotation direction T side with respect to a line parallel to the bottom edges 51a and 52a and passing through the axis O. By arranging the bottom edges 51a and 52a in a raised center height arrangement, chip separation at the bottom edges 51a and 52a is improved, which is preferable.

As shown in FIG. 4, the bottom edges 51a and 52a intersect the chisel edge 10a at first intersection points P11 and P21. The bottom edge 51a includes a main cutting edge 51A that extends from the first intersection point P11 toward the outer peripheral side and an axis-side cutting edge 51B that extends from the first intersection point P11 toward the axis O side. The bottom edge 52a includes a main cutting edge 52A that extends from the first intersection point P21 toward the outer peripheral side and an axis-side cutting edge 52B that extends from the first intersection point P21 toward the axis O side.

In the present specification, the main cutting edge 51A refers to an intersection ridge line between the groove wall surface 81a of the gash groove 81, which is located on a front side of the main cutting edge 51A in the end mill rotation direction T and functions as a rake surface, and the first flank surface 61a, which is located on a rear side of the main cutting edge 51A in the rotation direction and forms a rotation locus closer to the axis O than a rotation locus of the main cutting edge 51A. The axis-side cutting edge 51B is connected to one main cutting edge 51A, but is formed at an intersection ridge line between the first flank surface 62a of another main cutting edge 52A which is different from the one main cutting edge 51A and the groove wall surface 81a. The same applies to the main cutting edge 52A and the axis-side cutting edge 52B of the bottom edge 52a.

A reference line L shown in FIG. 4 is a straight line that is perpendicular to tangent lines (cutting edge tangent lines L1 and L2) of the cutting edge at the first intersection points P11 and P21 and passes through the axis O, as seen from the tip side in the axial direction. In a case of the present embodiment, a reference line passing through the axis O and perpendicular to the cutting edge tangent line at the first intersection point P11 and a reference line passing through the axis O and perpendicular to the cutting edge tangent line at the first intersection point P21 coincide with each other as seen from the tip side in the axial direction, and thus are shown as one reference line L. The reference line passing through the axis O and perpendicular to the cutting edge tangent line at the first intersection point P11 and the reference line passing through the axis O and perpendicular to the cutting edge tangent line at the first intersection point P21 may be straight lines that do not overlap each other when seen from the tip side in the axial direction.

Next, characteristic parts of the present embodiment will be described. The second intersection point P12, which is an intersection point between a flank surface boundary line 62c which is a boundary line between the first flank surface 62a and the second flank surface 62b and the groove wall surface 81a of the gash groove 81, is located on a front side in the end mill rotation direction T with respect to the reference line L.

In other words, a region (chisel edge front region Al) surrounded by the chisel edge 10a, the reference line L, and the axis-side cutting edge 51B consists of only the first flank surface 62a and does not include the second flank surface 62b. That is, the chisel edge front region A1 does not include a boundary portion (flank surface boundary line 62c) between the first flank surface 62a and the second flank surface 62b. Similarly, the chisel edge front region A2 also does not include a boundary portion (flank surface boundary line 61c) between the first flank surface 61a and the second flank surface 61b.

With such a configuration, in the ball end mill 1 according to the present embodiment, since a boundary portion of the flank surfaces with different clearance angles is not present in the chisel edge front regions A1 and A2, and edge portions that are convex toward the machined surface is not formed in the chisel edge front regions Al and A2, the chips are less likely to be pressed against the machined surface in the vicinity of the axis O, and occurrence of deposited metals can be suppressed.

At the same time, in the ball end mill 1 according to the present embodiment, since the second flank surfaces 62b and 61b are not included in the chisel edge front regions A1 and A2, wedge angles α of the axis-side cutting edges 51B and 52B according to the present embodiment can be made relatively small as compared to a case where the second flank surfaces 62b and 61b are included. As a result, in the present embodiment, cutting performance of the axis-side cutting edges 51B and 52B can be improved, and the occurrence of scratches can also be suppressed.

Further, as shown in FIG. 4, the flank surface boundary line 61c of one bottom edge 51a intersects the cutting edge tangent line L2 at the intersection point (first intersection point P21) with the chisel edge 10a of the other bottom edge 52a. Similarly, the flank surface boundary line 62c of the other bottom edge 52a intersects the cutting edge tangent line L1 at the intersection point (first intersection point P11) with the chisel edge 10a of the one bottom edge 51a.

With such a configuration, in the ball end mill 1 according to the present embodiment, on the axis side, a region occupied by the first flank surface can be secured to be large, and on a more outer peripheral side, a width of the first flank surface in the edge normal direction can be narrowed. This makes it possible to suppress an unnecessary increase in cutting resistance and to ensure the cutting performance of the cutting edge, which mainly contributes to cutting.

In addition, as shown in FIG. 4, in the present embodiment, as seen from the tip side in the axial direction, a total flank surface width W of the first flank surface 61a of one bottom edge 51a and the first flank surface 62a of the other bottom edge 52a which are adjacent to each other at the chisel edge, in a direction in which the reference line extends, has a portion decreasing toward the outer peripheral side in the radial direction from the second intersection point.

With such a configuration, in the ball end mill 1 according to the present embodiment, on the axis side, a region occupied by the first flank surface can be secured to be large, and on a more outer peripheral side, a width of the first flank surface in the edge normal direction can be narrowed. This makes it possible to suppress an unnecessary increase in cutting resistance and to ensure the cutting performance of the cutting edge, which mainly contributes to cutting.

### <Second embodiment>

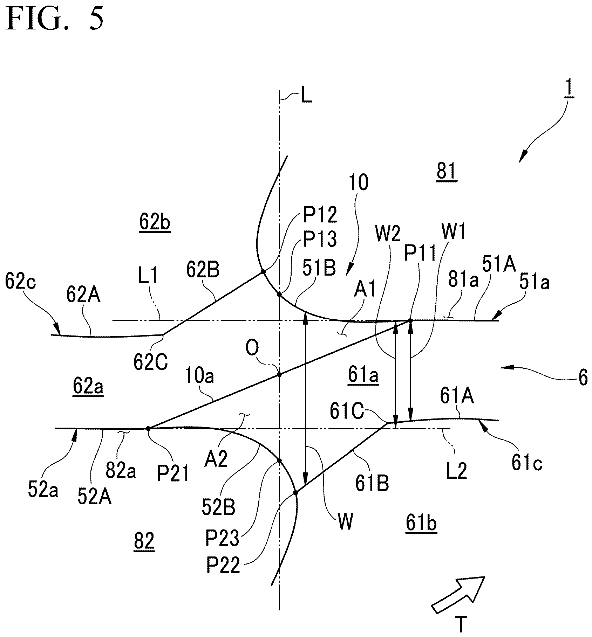

As a modification example of the first embodiment, a second embodiment is shown in FIG. 5. In the first embodiment, there are no clear bent portions on the flank surface boundary lines 61c and 62c. However, in the second embodiment, clear bent portions (connection positions) 61C and 62C are present. Other shapes are the same as those in the first embodiment. The same portions as those in the first embodiment are designated by the same reference signs.

In the tip flank surface 61, as shown in FIG. 5, the flank surface boundary line 61c, which is a boundary line between the first flank surface 61a and the second flank surface 61b, has a first portion 61A that extends along the bottom edge 51a adjacent to the first flank surface 61a, and a second portion 61B that is continuous with an inner peripheral-side end part of the first portion 61A and extends in a direction away from the bottom edge 51a to reach an end border of the gash groove 82. On the tip flank surface 62, the flank surface boundary line 62c between the first flank surface 62a and the second flank surface 62b has a first portion 62A and a second portion 62B, similar to the flank surface boundary line 61c.

The first portion 61A of the flank surface boundary line 61c extends substantially parallel to the main cutting edge 51A of one bottom edge 51a. In a case of the present embodiment, an inner peripheral-side end part of the first portion 61A extends slightly inward (toward the axis O side) with respect to the first intersection point P11 which is an inner peripheral end of the main cutting edge 51A. The flank surface boundary line 61c bends at a connection position 61C between the first portion 61A and the second portion 61B. The second portion 61B extends from the connection position 61 C in a direction away from one bottom edge 51a. The second portion 61B extends toward the gash groove 82 adjacent to the bottom edge 52a on the opposite side. The second portion 61B intersects the gash groove 82 (groove wall surface 82a) on the opposite side at a second intersection point P22 in the same manner as in the first embodiment.

The flank surface boundary line 62c has the same configuration as the flank surface boundary line 61c. That is, the first portion 62A extends along the main cutting edge 52A of the bottom edge 52a. The flank surface boundary line 62c bends at a connection position 62C which is located near the first intersection point P21. The second portion 62B extends toward the gash groove 81 on the opposite side and intersects an end border (groove wall surface 81a) of the gash groove 81 at the second intersection point P12.

In the present embodiment, also in the bottom edge 51a, the second intersection point P12 is located on the front side in the end mill rotation direction T with respect to the reference line L. In the bottom edge 52a, the second intersection point P22 is located on the front side in the end mill rotation direction T with respect to the reference line L.

With this configuration, the chisel edge front region A1, which is surrounded by the chisel edge 10a, the gash groove 81 (in other words, the axis-side cutting edge 5 IB), and the reference line L, consists of only the first flank surface 62a. That is, the second flank surface 62b does not extend into the chisel edge front region A1. As a result, similarly to the first embodiment, the occurrence of deposited metals or scratches on the workpiece can be suppressed. In the same manner, the chisel edge front region A2, which is surrounded by the chisel edge 10a, the gash groove 82 (in other words, the axis-side cutting edge 52B), and the reference line L, also consists of only the first flank surface 61a.

Next, a configuration specific to the second embodiment will be described.

In the present embodiment, as shown in FIG. 5, the connection position 61C between the first portion 61A and the second portion 61B of the flank surface boundary line 61c of one bottom edge 51a is located between a third intersection point P23, which is an intersection point between the other bottom edge 52a and the reference line L, and the axis O in a direction in which the reference line L extends (up-down direction in the drawing). In addition, the connection position 62C of the first portion 62A and the second portion 62B of the flank surface boundary line 62c of the other bottom edge is located between a third intersection point P13, which is an intersection point between one bottom edge 51a and the reference line L, and the axis O in the direction in which the reference line L extends.

As a result, on an inner peripheral side, occurrence of deposited metals are suppressed by ensuring that the chisel edge front region does not include the flank surface boundary line, and on a more outer peripheral side, the width of the first flank surfaces 61a and 62a in the edge normal direction can be narrowed, thereby suppressing an unnecessary increase in cutting resistance and ensuring the cutting performance of the main cutting edges 51A and 52A that mainly perform cutting. It is possible to comprehensively improve machined surface properties.

In the ball end mill 1 according to the present embodiment, a width W1 of the first flank surface 61a in a direction along the reference line L at the position of the first intersection point P1 1 is smaller than a width W2 of an interval in the direction along the reference line L between the cutting edge tangent line L1 on the bottom edge 51a and the cutting edge tangent line L2 on the bottom edge 52a. In the present embodiment, a width of the first flank surface 62a in the direction along the reference line L at the position of the first intersection point P21 is substantially equal to the above-described width W1 of the first flank surface 61a, and is also smaller than the width W2.

With this configuration, the width of the first flank surface 61a and the second flank surface 62a of the cutting edges, which are located on the outer peripheral side, in the edge normal direction can be further reduced. Therefore, it is possible to decrease the cutting resistance and improve the cutting performance of the main cutting edges 51A and 52A.

The width W2 of the interval between the cutting edge tangent lines L1 and L2 in the direction along the reference line L substantially coincides with the width of the chisel portion 10. The width of the chisel portion 10 is a width of the thinnest portion between the groove wall surfaces 81a and 82a, which face the end mill rotation direction T, in the two gash grooves 81 and 82 that pass each other, as seen from the tip side in the axial direction. Therefore, the width W1 of the first flank surfaces 61 a and 62a may be smaller than the width of the chisel portion 10.

In the present embodiment, as seen from the tip side in the axial direction, the second portion 61B extends in a direction away from the chisel edge 10a as it approaches the gash groove 82. Additionally, the second portion 62B extends in a direction away from the chisel edge 10a as it approaches the gash groove 81. With this configuration, the first flank surface 61a becomes wider as it approaches the chisel edge front region A2, and the first flank surface 62a becomes wider as it approaches the chisel edge front region A1. As a result, an area of a thicker portion in the chisel portion 10 can be ensured to be larger. The strength of the axis-side cutting edges 51B and 52B can be increased.

In the present embodiment, as seen from the tip side in the axial direction, in a region on the inner peripheral side with respect to the connection position 61C between the first portion 61A and the second portion 61B of the flank surface boundary line 61c, the total flank surface width W of two first flank surfaces 61a and 62a in the direction in which the reference lines L extends increases toward the inner peripheral side in a section from the connection position 61C to the second intersection point P22. Similarly, in a region on the inner peripheral side with respect to the connection position 62C between the first portion 62A and the second portion 62B of the flank surface boundary line 62c, the total flank surface width W of two first flank surfaces 61a and 62a in the direction in which the reference lines L extends increases toward the inner peripheral side in a section from the connection position 62C to the second intersection point P12. As a result, an area of a thicker portion in the chisel portion 10 can be ensured to be larger. The strength of the axis-side cutting edges 51B and 52B can be increased.

The operation and effects common to the first embodiment and the second embodiment will be described in more detail.

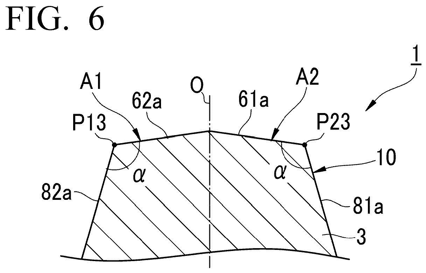

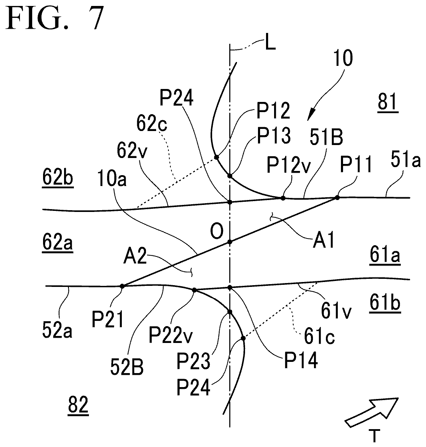

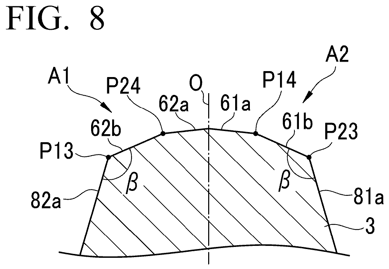

FIG. 6 is a partial cross-sectional view of the chisel portion 10 at a position along the reference line L in FIG. 4 or FIG. 5. FIG. 7 is a reference diagram showing a chisel edge region of another configuration for comparison. FIG. 8 is a reference diagram showing a cross section along the reference line L shown in FIG. 7.

In any of the embodiments, in the present invention, since each of the chisel edge front regions A1 and A2 consists of only each of the first flank surfaces 62a and 61a, as shown in FIG. 6, the chisel edge front regions A1 and A2 are regions with flat surfaces.

On the other hand, in a comparative example, as shown in FIG. 7, in a case where the boundary line between the first flank surface and the second flank surface is a flank surface boundary line 61v that extends along the bottom edge 51a and a flank surface boundary line 62v that extends along the bottom edge 52a, an intersection point between the flank surface boundary line 61v and the end border of the gash groove 82 is a second intersection point P22v which is located on the rear side in the rotation direction with respect to the reference line L. Additionally, an intersection point between the flank surface boundary line 62v and the end border of the gash groove 81 is a second intersection P12v which is located on the rear side in the rotation direction with respect to the reference line L.

In the configuration shown in FIG. 7, the chisel edge front region A1 includes a portion consisting of the first flank surface 62a and a portion consisting of the second flank surface 62b. The chisel edge front region A2 includes a portion consisting of the first flank surface 61a and a portion consisting of the second flank surface 61b. In other words, a boundary portion of flank surfaces with different clearance angles is present in the chisel edge front region. With such a configuration, as shown in FIGS. 7 and 8, edge portions that are convex toward the machined surface and consist of the flank surface boundary lines 62v and 61v are formed in the chisel edge front regions A1 and A2. The chisel edge front regions A1 and A2 are in the vicinity of a region where chips are generated during cutting and are regions that are easily blocked by the chisel edge 10a and the machined surface. Therefore, when an edge portion is present inside the chisel edge front regions A1 and A2, the chips tend to get caught by the edge portion and are pressed against the machined surface near the axis O, making deposited metals on the workpiece more likely to occur.

In contrast to the above, in the ball end mills 1 according to the first and second embodiments, since the boundary portion of the flank surfaces having different clearance angles is not present in the chisel edge front regions A1 and A2, and the chisel edge front regions A1 and A2 are flat surfaces, the chips are less likely to be pressed against the machined surface in the vicinity of the axis O, and occurrence of deposited metals can be suppressed.

At the same time, the axis-side cutting edges 51B and 52B are originally close to the rotation axis (axis O) and is less likely to increase a cutting speed. However, by configuring the chisel edge front regions A1 and A2 only with the first flank surfaces 62a and 61a, wedge angles (angles α in FIG. 6) of the axis-side cutting edges 5 I B and 52B become relatively small as compared to a case where the second flank surfaces 62b and 61b are present in the chisel edge front regions A1 and A2 (angles β in FIG. 8). As a result, in the present embodiment, the cutting performance of the axis-side cutting edges 51B and 52B is improved, and the occurrence of scratches can be suppressed.

Further, in the ball end mill 1 according to the present embodiment, the flank surface boundary line of one cutting edge and the cutting edge tangent line of the other cutting edge at the intersection point (first intersection point) with the chisel edge intersect each other. Therefore, on an inner peripheral side, the occurrence of deposited metals are suppressed by ensuring that the chisel edge front region does not include the flank surface boundary line, and on a more outer peripheral side, the width of the first flank surface in the edge normal direction can be narrowed, which helps to suppress an unnecessary increase in cutting resistance and ensures the cutting performance of the cutting edge that mainly performs cutting.

According to the ball end mill 1 of the present embodiment, it is possible to improve the machined surface properties (roughness and quality) in finishing through synergistic effects of suppressing the occurrence of deposited metals, suppressing the occurrence of scratches, and ensuring the cutting performance described above.

In the present embodiment, the width of each of the first flank surfaces 61a and 62a of the main cutting edges 51A and 52A in the edge normal direction is not particularly limited. However, for example, the width can be set in a range of 1% or more and 15% or less of the diameter D of the arcuate rotation locus of the bottom edges 51a and 52a.

In the first embodiment and the second embodiment, the groove wall surfaces 81a and 82a of the gash grooves 81 and 82, which face the end mill rotation direction T, are inclined surfaces that are directed toward the end mill rotation direction T as they extend away from the bottom edges 51a and 52a toward a center side of the convex hemispherical surface formed by the rotation locus of the bottom edges 51a and 52a. As a result, a rake angle in the edge normal direction is a negative angle in both the axis-side cutting edge 51B of the bottom edge 51a, which is located between the first intersection point P11 and the third intersection point P13, and the axis-side cutting edge 52B of the bottom edge 52a, which is located between the first intersection point P21 and the third intersection point P23. In this specification, the rake angles of the axis-side cutting edges 51B and 52B in the edge normal direction are angles formed between a straight line that passes through the axis-side cutting edges 51B and 52B and is parallel to the axis O and a rake surface, in a cross section that passes through the axis-side cutting edges 51B and 52B and is parallel to both the reference line L and the axis O.

In the first embodiment and the second embodiment, the rake angle of the axis-side cutting edges 51B and 52B in the edge normal direction is in a range of -30° or more and -15° or less. With this configuration, the wedge angles α of the axis-side cutting edges 51B and 52B can be set to wedge angles that provide a good balance between cutting performance and edge tip strength for the axis-side cutting edges 51B and 52B, which have a low rotation speed and are located near the enclosed space, which allows further suppression of occurrence of scratches and deposited metals while suppressing occurrence of chipping or damage to the axis-side cutting edges 51B and 52B.

When the rake angles of the axis-side cutting edges 51B and 52B in the chisel portion 10 are larger than -15° to a positive angle side, the wedge angle of the bottom edges 51a and 52a is reduced, resulting in insufficient edge tip strength, which makes chipping or damage more likely to occur. Meanwhile, when the rake angles of the axis-side cutting edges 51B and 52B are larger than -30° to a negative angle side, the cutting performance deteriorates, and scratches are likely to occur. The rake angles of the bottom edges 51a and 52a may gradually change from the chisel portion 10 toward the outer peripheral edges 51b and 52b. In portions of the bottom edges 51a and 52a on the outer peripheral side with respect to the first intersection points P11 and P21, the rake angles of the bottom edges 51a and 52a may be either a negative angle or a positive angle.

In the present invention, the clearance angles of the first flank surfaces 61a and 62a near the chisel, and the clearance angles of the second flank surfaces 61b and 62b are not particularly limited. For example, the clearance angles of the first flank surface 61a and the second flank surface 62a can be set in a range of 5° or more and less than 10°. The clearance angles of the second flank surfaces 61b and 62b can be in a range of 10° or more and 30° or less.

With this configuration, chips are less likely to be pressed against the machined surface near the rotation axis, thereby further suppressing the occurrence of deposited metals near the rotation axis. Additionally, the balance between the cutting performance and the edge tip strength by the wedge angle near the rotation axis can be further improved, which helps in further suppressing the occurrence of scratches.

At least a surface of the end mill body 3 at the tip part of the ball end mill 1 may be coated with a hard coating. The hard coating may be coated on the entire surface of the ball end mill 1 including the shank 2 and the tapered neck 4. The hard coating is coated using, for example, a physical vapor deposition method with a relatively low coating temperature. It is desirable that the hard coating is formed using an arc ion plating method, which is one of physical vapor deposition methods and provides excellent coating adhesion.

As a type of hard coating, a nitride or carbonitride coating, which exhibits excellent heat resistance and abrasion resistance, is desirable. Specifically, it is desirable to coat a hard coating with a nitride or carbonitride that has excellent heat resistance and abrasion resistance, in which a content ratio of Al is the highest, and a total content ratio of Al and Cr is 90 at% or more. In addition, it is desirable to coat a hard coating with a fine coating structure among such hard coatings. The hard coating has a higher hardness than a base material used to form the ball end mill 1.

As the hard coating, for example, a hard coating described in Japanese Patent No. 6410797 can be suitably used. The hard coating described in the above-mentioned patent publication consists of a nitride or carbonitride, in which a content ratio of aluminum (Al) is 50 at% or more and 68 at% or less, a content ratio of chromium (Cr) is 20 at% or more and 46 at% or less, and a content ratio of silicon (Si) is 4 at% or more and 15 at% or less, with respect to a total amount of metal (including semimetal) elements. When a total of metal (including semimetal) elements, nitrogen, oxygen, and carbon is set to 100 at%, an atomic ratio (at%) A of the metal (including semimetal) elements and an atomic ratio (at%) B of the nitrogen satisfy a relationship of 1.03 ≤ B/A ≤ 1.07. In an intensity profile obtained from an X-ray diffraction pattern or a selected area diffraction pattern of a transmission electron microscope, a peak intensity ascribable to a (200) plane or a (111) plane of a face-centered cubic lattice structure shows the maximum intensity.

A coating thickness of the hard coating is desirably 1.0 µm or more, and more desirably 2.0 µm or more. The coating thickness of the hard coating is desirably 3.0 µm or less. Further, as also disclosed in Japanese Patent No. 6410797, a protective coating may be formed on the hard coating. The protective coating described in the above-mentioned patent publication consists of a nitride or a carbonitride, in which a content ratio of Ti is 50 at% or more, and a content ratio of Si is 1 at% or more and 30 at% or less with respect to a total amount of metal (including semimetal) elements. By coating with such a protective coating, the abrasion resistance can be further enhanced even for high-hardness workpieces.

In addition, the hard coating can be formed using a method described in Japanese Patent No. 6410797. In the coating forming method described in the above-mentioned patent publication, an alloy target in which a content ratio of aluminum (Al) is 55 at% or more and 70 at% or less, a content ratio of chromium (Cr) is 20 at% or more and 35 at% or less, and a content ratio of silicon (Si) is 7 at% or more and 20 at% or less with respect to a total amount of metal (including semimetal) elements is installed in a cathode, and a coating is formed by an arc ion plating method. Coating formation conditions are set to either a condition in which a bias voltage applied to a base material is -220 V or more and -60 V or less, and a cathode voltage is 22 V or more and 27 V or less, or a condition in which a bias voltage applied to the base material is -120 V or more and -60 V or less, and a cathode voltage is 28 V or more and 32 V or less.

### [Examples]

Next, the present invention will be described in more detail with reference to examples.

In the present example, a ball end mill based on the embodiment described above and a ball end mill based on the comparative examples described with reference to FIGS. 7 and 8 were produced. That is, in the ball end mill of the example, the second flank surface does not extend into the chisel edge front region. In the ball end mill of the example, the flank surface boundary line between the first flank surface and the second flank surface changes its extension direction in the vicinity of the axis O, and the intersection point between the flank surface boundary line and the wall surface of the gash groove is located on the front side in the rotation direction with respect to the reference line L. In addition, the cutting edge tangent line at the intersection point between one bottom edge and the chisel edge intersects the flank surface boundary line of the other bottom edge. On the other hand, in the ball end mill of the comparative example, the second flank surface extends into the inside of the chisel edge front region. The following shows common tool specifications.

### (Tool Specifications)

- Edge diameter: 0.6 mm
- First clearance angle: 9°
- Second clearance angle: 17°

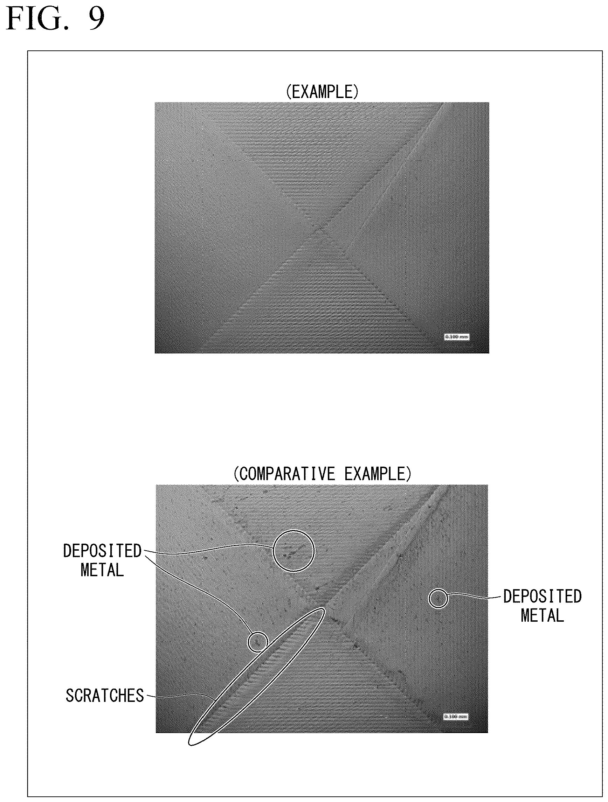

The contour machining of the bottom surface was performed on the ball end mills of the examples and comparative examples under the following cutting conditions, and a state of the machined surface was observed. FIG. 9 shows photographs of observation results. As shown in FIG. 9, deposited metals were observed everywhere on the machined surface of the workpiece cut by the ball end mill of the comparative example. In addition, scratches occurred at a portion where a direction changes in the contour machining. On the other hand, on the machined surface of the workpiece cut with the ball end mill of the example, neither deposited metal nor scratch was observed. In addition, a surface roughness of the machined surface was also smaller in the machined surface cut by the ball end mill of the example.

### (Cutting Conditions)

- Number of revolutions n: 40,000 min⁻¹
- Rotation speed Vc: 75 m/min
- Cutting speed Vf: 800 mm/min
- Feed rate per edge fz: 0.01 mm/t
- Axial cutting depth ap: 0.005 mm
- Radial cutting depth ae: 0.01 mm
- Workpiece: VANADIS 23 (64 HRC)
- Machined portion: bottom surface machining
- Coolant: mist blow

### [Reference Signs List]

1: Ball end mill
3: End mill body
10a: Chisel edge
51, 52: Cutting edge
52A, 52B: Axis-side cutting edge
61a, 62a: First flank surface
61b, 62b: Second flank surface
61c, 61v, 62c, 62v: Flank surface boundary line
81, 82: Gash groove
81a, 82a: Groove wall surface
L: Reference line
L1, L2: Cutting edge tangent line
O: Axis
P11, P21: First intersection point
P12, P22, P12v, P22v: Second intersection point
W: Total flank surface width
Wl, W2: Width

## Claims

1. A ball end mill comprising:
an end mill body configured to rotate around an axis; and
two cutting edges,
wherein the cutting edge is formed at an intersection ridge line between a groove wall surface of a gash groove and a flank surface located on a rear side in a rotation direction of the gash groove, and the flank surface includes a first flank surface that forms a chisel edge and a second flank surface that extends from the first flank surface to the rear side in the rotation direction with a larger clearance angle, and
in a case where, as seen from a tip side in an axial direction, an intersection point between one cutting edge of the cutting edges and the chisel edge is defined as a first intersection point, a straight line perpendicular to a cutting edge tangent line at the first intersection point and passing through the axis is defined as a reference line, and an intersection point between a flank surface boundary line between the first flank surface and the second flank surface of the other cutting edge of the cutting edges and the groove wall surface is defined as a second intersection point,
the second intersection point is located on a front side in the rotation direction with respect to the reference line, and
the flank surface boundary line of the other cutting edge intersects the cutting edge tangent line of the one cutting edge.

2. The ball end mill according to Claim 1,
wherein as seen from the tip side in the axial direction, the tip surface has a portion where a total flank surface width in an extension direction of the reference line of the first flank surface of the one cutting edge and the first flank surface of the other cutting edge, which are adjacent to each other at the chisel edge, decreases toward an outer peripheral side in a radial direction from the second intersection point.

3. The ball end mill according to Claim 1 or 2,
wherein as seen from the tip side in the axial direction, the flank surface boundary line has a portion extending in a direction approaching the chisel edge from the second intersection point toward an outer peripheral side in a radial direction.

4. The ball end mill according to any one of Claims 1 to 3,
wherein as seen from the tip side in the axial direction, a rake angle in an edge normal direction of a rake surface of an axis-side cutting edge, which is located on an outer peripheral side in a radial direction with respect to the reference line and on an axis side in the radial direction with respect to the first intersection point, is a negative angle.

5. The ball end mill according to any one of Claims 1 to 4,
wherein the rake angle is -30° or more and -15° or less, and a clearance angle of the first flank surface is 5° or more and less than 10°.
